# EUROPEAN PATENT SPECIFICATION

(11) **EP 3 402 209 B1**
(45) Date of publication and mention of the grant of the patent: **29.04.2020**
(21) Application number: 17170092.5
(22) Date of filing: 09.05.2017
(51) Int. Cl.: H04N 21/41, H04N 5/775

(54) **SYSTEM FOR CONNECTING CABLES EASILY TO A CONNECTOR OF ANY ELECTRONIC EQUIPMENT**
SYSTEM ZUM LEICHTEN VERBINDEN VON KABELN AN EINEM STECKVERBINDER EINER BELIEBIGEN ELEKTRONISCHEN AUSRÜSTUNG
SYSTÈME POUR CONNECTER FACILEMENT DES CÂBLES À UN CONNECTEUR D'UN ÉQUIPEMENT ÉLECTRONIQUE QUELCONQUE

(43) Date of publication of application: 14.11.2018
(73) Proprietor: Vestel Elektronik Sanayi ve Ticaret A.S., 45030 Manisa (TR)
(72) Inventor: DERELI, Ulas, 45030 Manisa (TR); KIRAZ, Alp, 45030 Manisa (TR)
(74) Representative: Ascherl, Andreas

(56) References cited:
- US-A1- 2006 064 526
- US-A1- 2006 218 474
- US-A1- 2007 055 801
- US-A1- 2010 029 117

## Description

This invention refers to a system for connecting cables easily to connectors of any electronic equipment by extracting out a connector according to claim 1.

### Background of the Invention

Generally, while connecting cables in the socket or connector many people find difficulty. Mostly, it may take more than an hour to connect a cable in appropriate socket or connector based on the input source selected. Especially, in audio and video systems, connecting the connector based on the input source that is selected by the user is difficult to make it. Only skilled person in that art can do the connection quickly without taking much time. However, for others without that knowledge for making connection of the cables is a back-breaking work. So there is a need for a method to connect cables easily to a connector of any electronic equipment.

In the prior art EP2439942B1, the document describes about TV signal switching box and controlling method thereof. The TV set signal switching box is connected between a TV set and signal sources to enable the signal sources to interact media signals with the TV set. The signal change in a TV set box and related control method are explained in detail. In the aforementioned signal change box, multiple signal sources can be concurrently connected to a multiple input / output ports. It is possible to switch between these signal sources. However, this system does not help the user to connect the cable to the appropriate connector based on input source.The input source can be IP, DVD and DVB set up box. Then the user may connect to the wrong socket and not able to watch/listen the appropriate signal.

The subject-matter of EP2439942B1 does not assist the end user or user to allow them for connecting the cable to the connector easiliy based on the input source selected by the user. Document US 2010 / 0 029 117 A1 discloses a system and method for ensuring that a large number of connectors are not intentionally disconnected. US 2006/218474 discloses a self-service kiosk system where an appropriate connector can be made available to the user.

### Object of the Invention

It is the object of the present invention to provide a system, in particular a system for connecting cables easily to connectors of any electronic equipment using a connector extraction method that allows the user to connect a corresponding cable to the appropriate connector easily compared to the known systems and methods.

### Description of the Invention

The before mentioned object is solved by a system for connecting cables to connectors of an electronic equipment by extracting out a connector based on an input source selected by an end user according to claim 1.

This solution is beneficial since such the electrical cable connection can be done very easily by anybody. The connection process may not consume much time for identifying and connecting the connectors based on the input source selected by the end user.

Further preferred embodiments are subject-matter of dependent claims and/or of the following specification parts.

According to a preferred embodiment of the present invention, the connector is extracted out from the cabinet based on the input source selected by the end user from the menu. Each connector of the plurality of connectors is controlled by a single motor of plurality of motors. The extracted connector is pulled back inside the cabinet after a predetermined duration. Further, the predetermined duration is adjusted by the end user.

Further benefits, goals and features of the present invention will be described by the following specification of the attached figures, in which components of the invention are exemplarily illustrated. Components of the systems and method according to the inventions, which match at least essentially with respect to their function, can be marked with the same reference sign, wherein such components do not have to be marked or described in all figures.

The invention is just exemplarily described with respect to the attached figures in the following. The scope of the invention is defined by the appended claims.

### Brief Description of the Drawings

- Fig. 1: illustrates a block diagram of a system for connecting cables to connectors of an electronic equipment by extracting out a connector, according to a preferred embodiment of the present invention;
- Fig. 2: illustrates a block diagram of a system for connecting cables to connectors of an electronic equipment by opening a cover of the connector, according to a further preferred embodiment of the present invention; and
- Fig. 3: illustrates working of a system for connecting cables to connectors of an electronic equipment by extracting out a connector, according to a preferred embodiement; and
- Fig. 4: illustrates working of a system for connecting cables to connectors of an electronic equipment by opening a cover of the connector, according to a futher preferred embodiement.

### Detailed Description of the Drawings

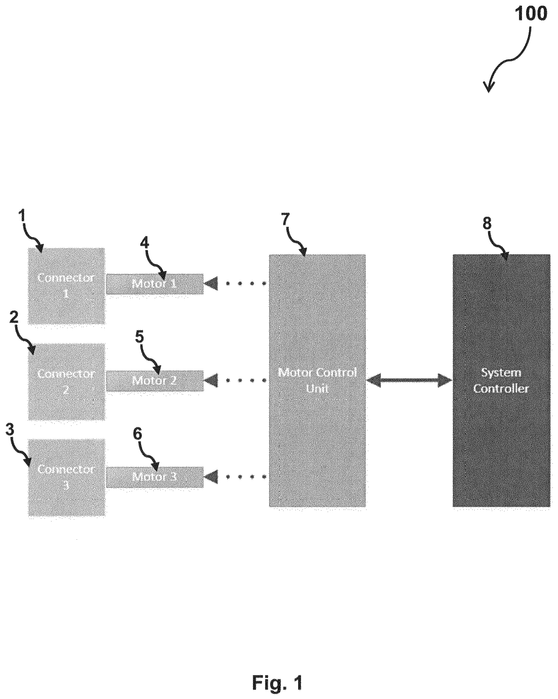

Fig. 1 illustrates a block diagram 100 of a system for connecting cables 12 to connectors (1,2 & 3) of an electronic equipment by extracting out a connector, according to a preferred embodiment of the present invention. The system comprises of a plurality of connectors (1,2 & 3), a system controller 8, a motor control unit 7, and a plurality of motors (4, 5 & 6). According to a preferred embodiment, the plurality of connectors (1,2 & 3) includes but not limited to connector 1, connector 2, connector 3 for the input sources provided in a cabinet of the electronic equipment for connecting the cables 12. Further, the input source is selected from a menu of the electronic equipment. The plurality of motors (4, 5 & 6) includes but not limited to motor 1, motor 2, motor 3 and that are provided in the cabinet for extracting out 13 the corresponding connector (1, 2 & 3) from the cabinet for connecting the cable 12.

According to a preferred embodiment of the present invention, the motor control unit 7 is provided for controlling the plurality of motor (4, 5 & 6) thereby extracting the plurality of connectors (1,2 & 3). Further, each connector of the plurality of connectors (1,2 & 3) is controlled by a single motor (4, 5 & 6) of plurality of motors (4, 5 & 6). The number of electrical motors can be changed using different mechanical gear systems. Further, the connectors (1,2 & 3) are configured for a specific input source and extracted out from a cabinet in which all the connectors (1, 2 & 3) are inserted.

The connectors (1,2 & 3) are extracted out from the cabinet based on the input source selected by the end user from the menu. The extracted connector (1,2 & 3) is pulled back inside the cabinet after a predetermined duration. The predetermined duration can be adjusted by the end user.

According to a preferred embodiment of the present invention, a system software 14 can be configured for obtaining and processing signals from the menu and activating the system controller 8 for controlling the motor control unit 7 thereby extracting the corresponding connector (1,2 & 3) of the input source selected. The system software 14 is incorporated in the system controller 8 for generating control signals to activate the connector and its corresponding motor (4, 5 & 6) that need to be activated.

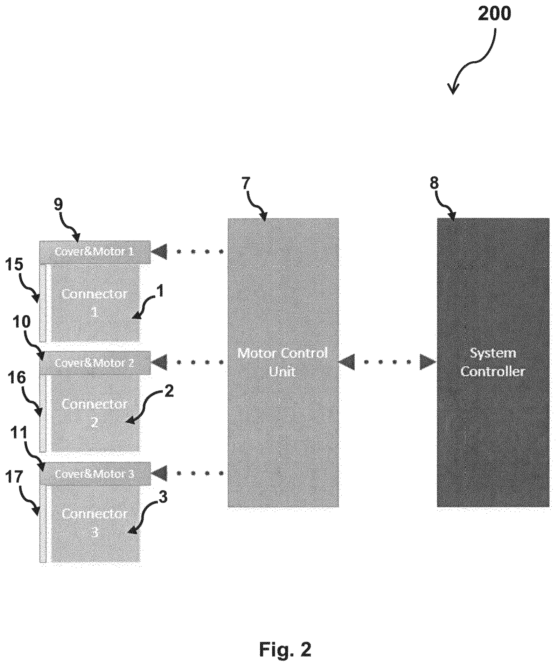

Fig. 2 illustrates a block diagram 200 of a system for connecting cables 12 to connectors of an electronic equipment by opening a cover of the connector, according to a further preferred embodiment of the present invention. In particular, according to further preferred embodiment, the system preferably comprises of a plurality of connectors (1,2 & 3), a system controller 8, a motor control unit 7, a plurality of cover (15, 16 &17) and a plurality of motors (9, 10 &11).The plurality of connectors (1,2 & 3) includes but not limited to connector 1, connector 2, connector 3 and that are provided for connecting the cables 12.

The plurality of covers (15, 16 &17) are provided for keeping the plurality of connectors (1,2 & 3) in open or closed state. The plurality of motors (9, 10 &11) are provided for opening or closing the plurality of covers (15, 16 &17) for connecting the cable. The system software 14 can be configured for obtaining and processing signals from the menu and activating the system controller 8 for controlling the motor control unit 7 thereby opening the cover (15, 16 &17) of the corresponding connector (1,2 & 3) of the input source selected. The connectors (1,2 & 3) can be configured for a specific input source. The cover (15, 16 &17) get opened or closed based on the input source selected by the end user by means of plurality of motors (9, 10 & 11).

According to a further preferred embodiment of the present invention, the motor control unit 7 is provided for controlling the plurality of motors (9, 10 & 11) thereby opening the cover (15, 16 &17) of the corresponding connector (1, 2 & 3). The single cover is provided for each connector (1,2 & 3), and each cover (15,16 & 17) of the plurality of connectors (1,2 & 3) is controlled by a single motor.

According to a further preferred embodiment of the present invention, the covers can close the connectors (1,2 & 3) provided inside the cabinet of the electronic equipment after a predetermined duration, in case no cable is connected to the connector (1,2 & 3) or socket. The predetermined duration can be adjusted by the end user. The system controller 8 is provided for controlling the motor control unit 7 to activate respective motor (9, 10 &11) of the corresponding connector.

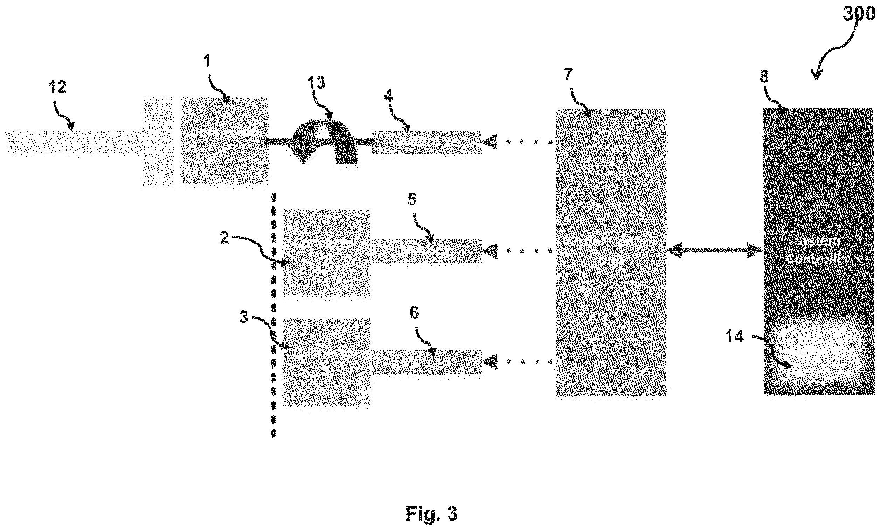

Fig. 3 illustrates working of a system 300 for connecting cables 12 to connectors of an electronic equipment by extracting out a connector, according to a preferred embodiment. The method for connecting cables 12 to connectors (1,2 & 3) preferably comprises the steps of allowing a user to select an input source from a menu of the electronic equipment, based on the input source, sending a signal from a system controller 8 to activate a motor control unit 7, controllling corresponding motor (4, 5 & 6) by the motrol control unit 7 for extracting out 13 the respective connector (1,2 & 3) from a cabinet in which all connectors (1,2 & 3) are inserted, extracting out 13 the respective connector (1, 2 & 3) from the cabinet for allowing the end user to connect the cable. The method further includes pulling back the connector (1,2 & 3) inside the cabinet after a predetermined duration. Once the cable is connected, the connector (1,2 & 3) can return back to its original position.

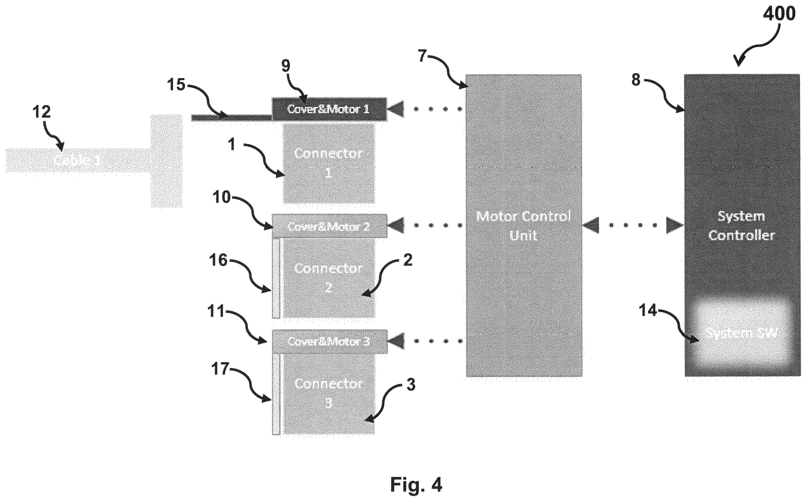

Fig. 4 illustrates working of a system 400 for connecting cables 12 to connectors of electronic equipment by opening a cover of the connector, according to a further preferred embodiment. The method for connecting cables 12 to connectors (1,2 & 3) omprising the steps of allowing a user to select an input source from a menu of the electronic equipment, sending a signal from a system controller 8 to activate a motor control unit (7), controlling corresponding motor (4, 5 & 6) by the motor control unit (7) for opening a respective cover (15, 16 &17) of the respective connector (1,2 & 3) present in the cabinet in which all connectors (1,2 & 3) are inserted, opening the respective cover (15, 16 &17) of the connector (1, 2 & 3) present in the cabinet for allowing the end user to connect the cable 12. The method further includes closing the cover of the connector (1,2 & 3) provided in the cabinet after a predetermined duration. Once the cable is connected, the corresponding cover of the connector (1,2 & 3) can be kept open until the removal of the cable.

Thus, the present invention refers to a system a system for connecting cables 12 to a connector (1,2 & 3) of the electronic equipment by extracting out a connecter or by opening a cover of the connector solves the object mentioned. That is the system allows the user to connect cable to the appropriate connector (1,2 & 3) easily compared to the known systems and methods.

In particular, the present invention refers to a system for connecting cables 12 to connectors of an electronic equipment either by extracting out a connector or by opening a cover of a connector based on an input source selected by an end user. According to an embodiment, the system comprises of plurality of connectors 1,2 & 3 that can be activated by a plurality of motors 4, 5 & 6 to extract out 13 the specific connector 1,2 & 3 from a cabinet in which plurality of connectors 1,2 & 3 are inserted. According to further preferred embodiment, the system comprises of plurality of connectors 1, 2 & 3 and pllurality of covers 15, 16 &17. The specific covers 15, 16 &17 of the specific connector 1,2 & 3 can be opened by the plurality of motors 4, 5 & 6. The opening of cover of the specific connector 1, 2 & 3 or extraction of the specific connector 1, 2 & 3 out from its position is performed based on the input source selected by the end user.

### List of reference numbers

- 1: connector 1
- 2: connector 2
- 3: connector 3
- 4: motor 1
- 5: motor 2
- 6: motor 3
- 7: motor control unit
- 8: a system controller
- 9: motor 1 of cover 1
- 10: motor 2 of cover 2
- 11: motor 3 of cover 3
- 12: cable
- 13: extracted out or extract out
- 14: a system software
- 15: cover 1
- 16: cover 2
- 17: cover 3
- 100: block diagram of a system for connecting cables to a connector of electronic equipment by extracting out a connector
- 200: block diagram of a system for connecting cables to a connector of electronic equipment by opening a cover of the connector
- 300: working of a system for connecting cables to a connector of electronic equipment by extracting out a connector
- 400: working of a system for connecting cables to a connector of electronic equipment by opening a cover of the connector

## Claims

1. A system for connecting a corresponding cable to a connector of an electronic equipment based on an input source selected by an end user, the input source being a device providing media signal to the electronic equipment, wherein the system comprises of:
a plurality of connectors (1,2 & 3) for the input sources provided in a cabinet of the electronic equipment for connecting the cables (12), wherein the input source is selected from a menu of the electronic equipment;
a plurality of motors (4, 5 & 6) provided in the cabinet adapted to extract out the connectors (1, 2 & 3) from the cabinet for connecting the cable (12);
a motor control unit (7) adapted to control the plurality of motors (4, 5 & 6) thereby extracting the plurality of connectors (1,2 & 3);
a system software (14) configured for obtaining and processing signals from the menu and activating a system controller (8) for controlling the motor control unit (7) thereby extracting the corresponding connector (1,2 & 3) of the input source selected;
wherein the extracted connector (1,2 & 3) is pulled back inside the cabinet after a predetermined duration, and wherein the predetermined duration is adjusted by the end user.

2. The system of claim 1, wherein the connector (1, 2 & 3) is extracted out from the cabinet based on the input source selected by the end user from the menu.

3. The system of claim 1, wherein each connector (1,2 & 3) of the plurality of connectors (1,2 & 3) is controlled by a single motor (4, 5 & 6) of plurality of motors (4, 5 & 6).

## Patentansprüche

1. Ein System zum Verbinden eines entsprechenden Kabels mit einem Verbinder eines elektronischen Geräts auf der Grundlage einer von einem Endbenutzer ausgewählten Eingangsquelle, wobei die Eingangsquelle eine Vorrichtung ist, die ein Mediensignal an das elektronische Gerät liefert, wobei das System Folgendes umfasst:
eine Vielzahl von Verbindern (1, 2 & 3) für die Eingangsquellen, die in einem Gehäuse des elektronischen Geräts zum Verbinden der Kabel (12) vorgesehen sind, wobei die Eingangsquelle aus einem Menü des elektronischen Geräts ausgewählt wird;
eine Vielzahl von Motoren (4, 5 & 6), die in dem Schrank vorgesehen sind, die geeignet sind, die Verbinder (1, 2 & 3) aus dem Schrank zum Verbinden des Kabels (12) herauszuziehen;
eine Motorsteuereinheit (7), die geeignet ist, die Vielzahl von Motoren (4, 5 & 6) zu steuern, wodurch die Vielzahl von Verbindern (1, 2 & 3) herausgezogen wird;
eine Systemsoftware (14), die zum Erhalten und Verarbeiten von Signalen aus dem Menü und zum Aktivieren einer Systemsteuerung (8) zum Steuern der Motorsteuereinheit (7) konfiguriert ist, wodurch der entsprechende Verbinder (1, 2 & 3) der ausgewählten Eingangsquelle extrahiert wird;
wobei
der herausgezogene Verbinder (1, 2 & 3) nach einer vorbestimmten Dauer in das Innere des Gehäuses zurückgezogen wird, und wobei die vorbestimmte Dauer durch den Endbenutzer eingestellt wird.

2. System nach Anspruch 1, bei dem der Verbinder (1, 2 & 3) auf der Grundlage der vom Endbenutzer aus dem Menü ausgewählten Eingangsquelle aus dem Schrank herausgezogen wird.

3. System nach Anspruch 1, bei dem jeder Verbinder (1, 2 & 3) der Vielzahl von Verbindern (1, 2 & 3) von einem einzigen Motor (4, 5 & 6) der Vielzahl von Motoren (4, 5 & 6) gesteuert wird.

## Revendications

1. Système pour connecter un câble correspondant à un connecteur d'un équipement électronique basé sur une source d'entrée sélectionnée par un utilisateur final, la source d'entrée étant un dispositif fournissant un signal de média à l'équipement électronique, dans lequel le système comprend
une pluralité de connecteurs (1, 2 et 3) pour les sources d'entrée prévus dans une armoire de l'équipement électronique pour connecter les câbles (12), dans lequel la source d'entrée est sélectionnée à partir d'un menu de l'équipement électronique ;
une pluralité de moteurs (4, 5 & 6) prévus dans l'armoire, adaptés pour extraire les connecteurs (1, 2 & 3) de l'armoire pour connecter le câble (12) ;
une unité de commande de moteur (7) adaptée pour commander la pluralité de moteurs (4, 5 & 6), extrayant ainsi la pluralité de connecteurs (1, 2 & 3) ;
un logiciel système (14) configuré pour obtenir et traiter des signaux du menu et activer un contrôleur système (8) pour commander l'unité de commande de moteur (7), extrayant ainsi le connecteur correspondant (1, 2 & 3) de la source d'entrée sélectionnée ;
où
le connecteur extrait (1, 2 et 3) est ramené à l'intérieur du boîtier après une durée prédéterminée, et dans lequel la durée prédéterminée est ajustée par l'utilisateur final.

2. Le système de la revendication 1, dans lequel le connecteur (1, 2 & 3) est extrait de l'armoire sur la base de la source d'entrée sélectionnée par l'utilisateur final dans le menu.

3. Le système de la revendication 1, dans lequel chaque connecteur (1, 2 & 3) de la pluralité de connecteurs (1, 2 & 3) est commandé par un seul moteur (4, 5 & 6) de la pluralité de moteurs (4, 5 & 6).
